## Europäisches Patentamt
## European Patent Office
## Office européen des brevets

(19)

(11) Veröffentlichungsnummer: **0 141 265**
**B1**

(12) **EUROPÄISCHE PATENTSCHRIFT**

(45) Veröffentlichungstag der Patentschrift:
18.05.88

(21) Anmeldenummer: **84111597.5**

(22) Anmeldetag: **28.09.84**

(51) Int. Cl.⁴: **B 62 D 55/30**

(54) **Kettenspannvorrichtung.**

(30) Priorität: **21.10.83 DE 3338313**

(43) Veröffentlichungstag der Anmeldung:
**15.05.85 Patentblatt 85/20**

(45) Bekanntmachung des Hinweises auf die Patenterteilung:
**18.05.88 Patentblatt 88/20**

(84) Benannte Vertragsstaaten:
**AT BE CH FR GB IT LI NL SE**

(56) Entgegenhaltungen:
**DE-A-2 030 019**
**DE-A-2 358 386**
**FR-A-1 012 327**
**US-A-2 561 901**
**US-A-2 843 431**
**US-A-3 409 335**
**US-A-4 279 318**

(73) Patentinhaber: **Krauss- Maffei Aktiengesellschaft,
Krauss- Maffei- Strasse 2, D-8000 München 50 (DE)**

(72) Erfinder: **Hesse, Hans, Ing.(grad.), Bergsonstrasse
72b, D-8000 München 60 (DE)**

## Beschreibung

Die Erfindung bezieht sich auf eine hydraulische Kettenspannvorrichtung gemäß dem Oberbegriff des Hauptanspruchs.

Eine Kettenspannvorrichtung dieser Art ist aus der DE-A-3 044 616 bekannt, bei der die Spannung der Gleiskette über eine mit einem Druckmittel beaufschlagbare Kolben-Zylindereinheit erfolgt. Bei dieser Kettenspannvorrichtung sind jedoch der Druck und die Menge des flüssigen Druckmittels wegen evtl. Leckageverluste stets zu kontrollieren, was einen hohen Bedienungszeitaufwand erfordert. Zur Druckerzeugung ist ferner die Installation einer Hydraulikpumpe erforderlich.

Demgegenüber besteht die Aufgabe der Erfindung in der Schaffung einer Kettenspannvorrichtung, bei der sich ohne die Anordnung einer gesonderten Hydraulikpumpe in jedem Betriebszustand die richtige Kettenspannung selbsttätig einstellt.

Diese Aufgabe wird durch die Merkmale des Hauptanspruchs gelöst. Die Erfindung macht von der Eigenart von Gleiskettenfahrwerken Gebrauch, daß beim fahrenden Fahrzeug die in das Umlenkrad ein- und auslaufenden Kettenglieder Schwingungen erzeugen, die sich auf die Abstützung des Umlenkrades gegenüber der Fahrzeugwanne bzw. auf die zwischen Umlenkrad und Fahrzeugwanne angeordnete Kettenspannvorrichtung übertragen. Gemäß der Erfindung wird die durch die Schwingung freigesetzte Energie zur Druckerzeugung für die hydraulische Kolben-Zylindereinheit genutzt.

Vorzugsweise ist in der Durchgangsleitung ein das Rückschlagventil umgehender Bypass angeordnet, der mit einem den Druck im Nebenzylinderraum begrenzenden Druckbegrenzungsventil ausgestattet ist. Durch diese Einhaltung eines bestimmten Druckniveaus kann sichergestellt werden, daß in jedem Fahr-Betriebszustand stets die erforderliche Kettenspannkraft eingehalten werden kann.

Um zu vermeiden, daß das Umlenkrad bzw. dessen Lagerung an der Fahrzeugwanne bei einem Überlastungsstoß Schaden nimmt, kann es zweckmäßig sein, an der Zylindereinheit ein Überdruckventil anzuordnen, durch das das Drucköl bei Überschreiten eines zulässigen Wertes aus dem Hauptzylinderraum abgeleitet werden kann.

Vorzugsweise sind am Überdruckventil Einrichtungen zum Verstellen des Begrenzungsdruckes angeordnet, so daß die Kette damit jederzeit, beispielsweise zu Montagezwecken, entspannt werden kann.

In einer bevorzugten Ausführungsform weist die Federungseinheit eine progressive Federkennlinie auf, wodurch sich zu Beginn des Kettenspannvorgangs, beispielsweise nach einer Kettenmontage, ein verhältnismäßig großer Pumpenhub einstellt, der mit zunehmender Spannungskraft abnimmt. Damit wird sichergestellt, daß die Kette schnell die für einen einwandfreien Fahrbetrieb erforderliche Spannung erreicht.

Ein Ausführungsbeispiel der Erfindung wird nachfolgend anhand der Zeichnung näher erläutert.

Es zeigen:

Fig. 1 in schematischer Darstellung einen Teilausschnitt aus dem Bugbereich eines Gleiskettenfahrverks mit einem Umlenkrad, das über eine, mit einer hydraulischen Spannvorrichtung beaufschlagten Kurbelschwinge an der Fahrzeugwanne gelagert ist und

Fig. 2 einen Schnitt durch die hydraulische Spannvorrichtung nach Fig. 1.

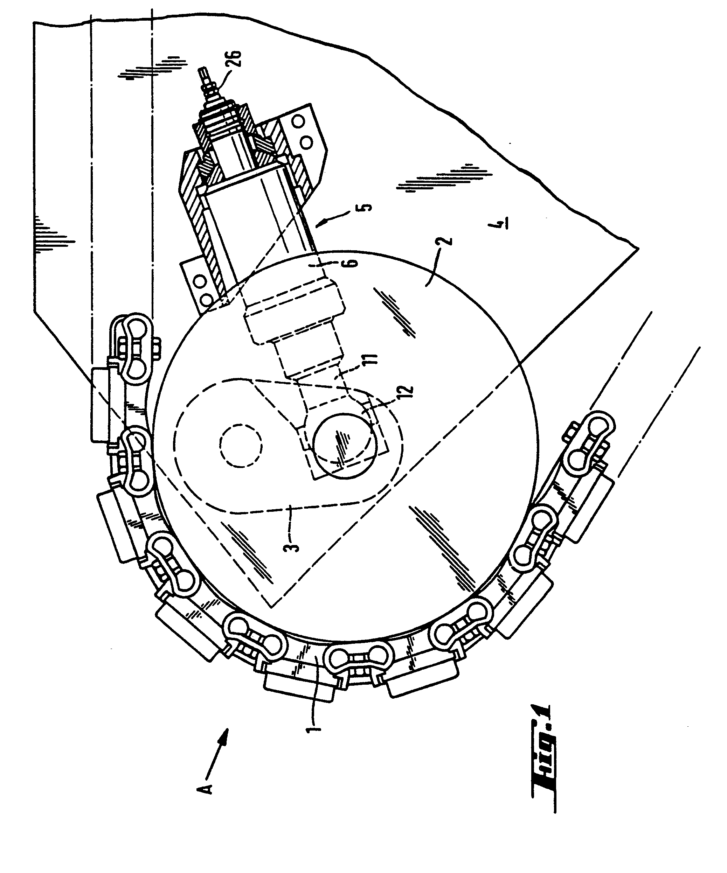

Der in Fig. 1 dargestellte Teilausschnitt eines Gleiskettenfahrwerks zeigt ein, eine Gleiskette 1 tragendes Umlenkrad 2, das über eine Kurbelschwinge 3 an der Fahrzeugwanne 4 gelagert ist. An der Kurbelschwinge 3 ist eine hydraulische Spannvorrichtung 5 angelenkt, die mit ihrem anderen Ende an der Fahrzeugwanne 4 abgestützt ist.

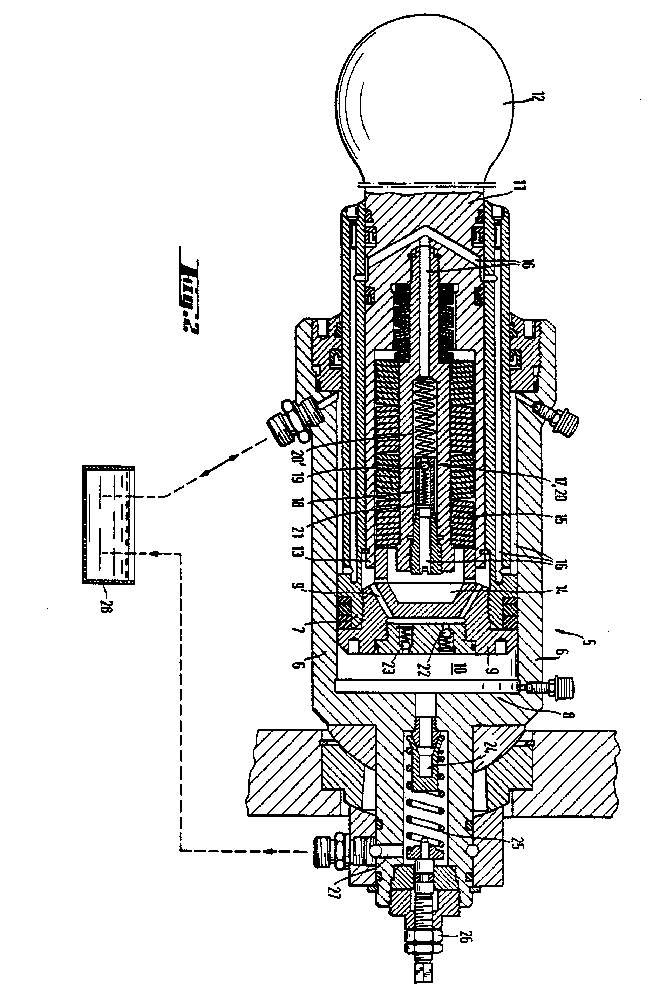

Die in Fig. 2 im Schnitt dargestellte hydraulische Spannvorrichtung 5 besteht aus einem Zylinder 6, in dem eine Kolbeneinheit 7 geführt ist. Der Zylinder 6, dessen Zylinderboden 8 und der Kolbenboden 9 der Kolbeneinheit 7 umschließen einen Hauptzylinderraum 10. In der Kolbeneinheit 7 ist ein Stößel 11 axial verschieblich gelagert, dessen freies Ende ein zur Anlenkung an die Kurbelschwinge 3 geeignetes Kugelgelenkteil 12 aufweist und dessen anderes Ende als Stößelkolben 13 ausgebildet ist, der einen in der Kolbeneinheit 7 befindlichen Nebenzylinderraum 14 abschließt. Der Stößelkolben 13 ist über eine aus einem Tellerfederpaket 15 mit progressiver Federkennlinie bestehende Federungseinheit an der Kolbeneinheit 7 abgestützt.

Eine Durchgangsleitung 16 führt vom Nebenzylinderraum 14 über den Stößelkolben 13, die Kolbenheiheit 7 und den Zylinder 6 zu einem Hydraulikreservoir 28, wobei an den Übergangsstellen von Stößelkolben 13 und Kolbeneinheit 7 sowie von Kolbeneinheit 7 und Zylinder 6 Ausgleichsräume vorgesehen sind, die in jeder Betriebsstellung der genannten Funktionsteile einen störungsfreien Durchfluß gewährleisten. In der Durchgangsleitung 16 im Stößelkolben 13 befindet sich ein den Durchfluß aus dem Nebenzylinderraum 14 in Richtung des Hydraulikreservoirs 28 sperrendes Stößel-Rückschlagventil 17. Dieses Stößel-Rückschlagventil 17 besteht aus einem Ventilkörper 18, durch den die Durchgangsleitung 16 verläuft, und einer den Durchfluß in einer Richtung sperrenden Sperrkugel 19. Der Ventilkörper 18 ist gleichfalls Teil eines Dryckbegrenzungsventils 20, der bei im Nebenzylinderraum 14 aufkommendem Überdruck entgegen der Wirkung einer Ventilfeder 20' verschiebbar ist und einen das Stößel-Rückschlagventil 17 umgehenden Bypass 21 in der Durchgangsleitung 16 freigibt.

Im Kolbenboden 9 der Kolbeneinheit 7 sind zwei Rückschlagventile 22 und 23 mit entgegengesetzt gerichteter Sperrichtung angeordnet.

Im Zylinderboden 8, über den die Spannvorrichtung 5 an der Fahrzeugwanne 4 abgestützt ist, befindet sich ein Überdruckventil 24, dessen Begrenzungsdruck über eine auf eine Ventilfeder 25 wirkende Stellschraube 26 einstellbar ist. Mit dem Überdruckventil 24 ist der Druck im Hauptzylinderraum 10 über eine zum Hydraulikölreservoir 28 führende Überdruckleitung 27 regulierbar.

Bei Inbetriebnahme mit zunächst noch ungespannter Gleiskette wird das Fahrzeug vorwärts gefahren. Bedingt durch die Kettenteilung läuft die Gleiskette 1 als Polygon bzw. Vieleck über das Umlenkrad 2 und übt zusätzlich zu den Zugkräften aus Ober- und Untertrum eine wechselnde Belastung in Richtung des Pfeils "A" (Fig. 1) auf das Umlenkrad 2 mit der Kettenteilungsfrequenz aus.

Diese Wechsellast wird durch den Stößel 11 über das Tellerfederpaket 15, den Kolbenboden 9, den Zylinder 6 und den Zylinderboden 8 auf die kugelige Abstützung an der Fahrzeugwanne 4 abgestützt.

Die Tellerfedern des Tellerfederpakets 15, die bis zu einer Endkraft von ca. 10 Mp abgestuft sind, bewirken bei Entlastung der hydraulischen Spannvorrichtung 5 ein Ausfahren des Stößels 11. Hierbei wird durch den im Nebenzylinderraum 14 entstehenden Unterdruck das Stößel-Rückschlagventil 17 geöffnet und Hydrauliköl über die durch den Zylinder 6, die Kolbeneinheit 7 und den Stößel 3 führende Durchgangsleitung aus dem Hydraulikölreservoir 28 angesaugt. Bei erneuter Belastung des Stößels 11 schließt das Stößel-Rückschlagventil 17 und das angesaugte Hydrauliköl wird durch das im Kolbenboden 9 befindliche Rückschlagventil 22 in den Hauptzylinderraum 10 gepreßt, mit der Folge, daß die Kolbeneinheit 7 mit dem Stößel 11 aus dem Zylinder 6 ausgefahren wird.

Dieser Vorgang wiederholt sich mit der Kettenteilungsfrequenz solange, bis der Druck im Nebenzylinderraum 14 den Öffnungsdruck des Druckbegrenzungsventils 20 erreicht, bei dem der Ventilkörper 18 entgegen der Wirkung der Ventilfeder 20' verschoben wird und einen das mit der Sperrkugel 19 versehene Stößel-Rückschlagventil 17 umgehenden Bypass 21 in der Durchgangsleitung 6 freigibt. Die Kettenspannkraft wird somit durch den Öffnungsdruck des Druckbegrenzungsventils 20 bestimmt. Nach Erreichen dieses Öffnungsdruckes arbeitet das als Stößelpumpe wirkende Stößel-Rückschlagventil 17 im Leerlauf.

Durch die progressive Federkennlinie der unterschiedlichen Tellerfedern des Tellerfederpakets 15 ist der Pumpenhub am Anfang relativ groß und nimmt mit zunehmender Spannungskraft ab. Das bewirkt, daß eine noch ungespannte Kette schnell die für den Fahrbetrieb erforderliche Spannung erreicht.

Durch die abnehmende Hubweglänge des Stößels 11 infolge der größer werdenden Gegenkraft beim Spannen vermindert sich entsprechend die thermische Belastung des Systems.

Nach dem vorbeschriebenen Spannvorgang stellt sich jeweils die für den einwandfreien Fahrbetrieb erforderliche Kettenspannkraft ein, wobei auch eine beispielsweise infolge von Verschleiß sich einstellende Kettenlängung automatisch nachgeregelt wird.

Neben der präzisen Einhaltung der für den Fahrbetrieb erforderlichen Kettenspannung erfüllt die Spannvorrichtung folgende Funktionen:

1. Vermeiden des Ausfahrens des Stößels 11 bei zwar korrekter Spannweglänge aber Entlastung der Gleiskette 1, wie es sich beispielsweise bei Einfederungsvorgängen am Laufwerk einstellt.

2. Sperren der Spannvorrichtung bei Belastungswerten, die größer sind als die Kettenspannkraft, beispielsweise beim Bremsen oder bei Rückwärtsfahrt des Fahrzeugs.

3. Dämpfen von hohen Stoßkräften beim Auffahren des Fahrzeugs auf Hindernisse bzw. bei Aufsetzen des im Fahrzeugbug angeordneten Umlenkrades.

4. Einfache Möglichkeit zum Entspannen der Kette bei Montagearbeiten.

5. Abbau der Schwingbeschleunigung auf das Fahrzeug aufgrund des Polygoneffektes der Gleiskette.

Diese vorgenannten Funktionen werden wie folgt gelöst:

Zu 1: Ist der für die erforderliche Kettenspannkraft entsprechende Ausfahrweg des Stößels 11 an der Spannvorrichtung 5 erreicht, wird beim Fahren mit entlasteter Kette durch Einfedern der Laufrollen ein weiteres Aufpumpen bzw. Ausfahren der Spannvorrichtung bewirkt, da die nötige Gegenkraft an der Kolbeneinheit fehlt. Beim anschließenden Zurückpendeln der Laufwerksteile in ihre Normallage steigt die Kettenspannkraft und damit der Druck im Hauptzylinderraum 10. Dieser höhere Druck bewirkt gegenüber dem durch das Druckbegrenzungsventil 20 beschränkten Druckmaximalwert im Nebenzylinderraum 4 eine Druckdifferenz, die das Rückschlagventil 23 im Kolbenboden 9 öffnet und die vorhandene überhöhte Kettenspannkraft wieder abbaut, indem sich das Druckbegrenzungsventil 20 öffnet und das Ölüberschußvolumen über den Bypass 21 und die Durchgangsleitung 16 in das Hydraulikölreservoir 28 zurückleitet. Bei Erreichen des vorgegebenen Kettenspanndrucks ist das System wieder im stabilen Zustand.

Der Öffnungsdruck des Rückschlagventils 23 muß dabei über dem des nahezu drucklosen Rückschlagventils 22 liegen und darf höchstens den Wert des Druckbegrenzungsventils 20 erreichen.

Zu 2: Während bei Vorwärtsfahrt eines heckgetriebenen Gleiskettenfahrzeugs die Umlenkräder weitgehend selbst von den statischen Kettenzugkräften entlastet werden, kehrt sich dieser Effekt bei Rückwärtsfahrt bzw. beim Bremsen um, so daß dann am Kettenspanner eine Kraft abzustützen ist, die ein Mehrfaches der normal geforderten Kettenspannkraft beträgt.

Tritt dieser Fall ein, so würde sich entsprechend dem zu Punkt 1 geschilderten Funktionsablauf das gesamte Ölvolumen über das Rückschlagventil 23 und das Druckbegrenzungsventil 20 abbauen.

Um einen derartigen Vorgang zu vermeiden, ist der Kolbenboden 9 mit Zulaufbohrungen 9' versehen, die die beiden Rückschlagventile 22 und 23 mit dem Nebenzylinderraum 14 verbinden. Ist nun eine Kraft der vorbeschriebenen Art (Rückwärtsfahrt; Bremsen) über die Spannvorrichtung 5 abzustützen und ist diese Kraft größer als die Federkraft des Tellerfederpakets 15, so kommt der Stößelkolben 13 an den Öffnungen der Zulaufbohrungen 9' zur Auflage, wodurch das im Hauptzylinderraum 10 befindliche Öl eingeschlossen bleibt und eine Verkürzung der Spannvorrichtung verhindert wird.

Zu 3: Beim Anfahren von Hindernissen bzw. Aufsetzen der Umlenkräder bei großen Nickbewegungen des Fahrzeugs werden bei starren Kettenspannsystemen sehr hohe Stoßkräfte in das Fahrzeug eingeleitet, die teilweise bis zur Zerstörung der Umlenkräder und deren Aufhängung sowie zur Verletzung der Besatzung führen können.

Für eine zuverlässig wirkende Dämpfung derartiger Stöße ist im Zylinderboden 8 das Überdruckventil 24 vorgesehen, welches bei Druckbelastungen über den maximalen Fahrbetriebswerten öffnet und somit der Spannvorrichtung 5 einen Dämpfungsweg ermöglicht. Nach dem gedämpften Stoß spannt sich die Spannvorrichtung wieder selbständig.

Zu 4: Zum Entspannen der Gleiskette 1 zu Montagezwecken kann das Überdruckventil 24 über die Stellschraube 26 entlastet werden. Wie beim Schutz vor Überlastungsstößen fließt dann das Öl zum Hydrauliкölreservoir 28 zurück.

Zu 5: Die Schwingungsbeschleunigung aus dem Polygon-bzw. Vieleck-Effekt der in das Umlenkrad 2 ein- und auslaufenden Gleiskette 1 wird über das Tellerfederpaket 15 weich abgefangen und gedämpft.

**Patentansprüche**

1. Hydraulische Spannvorrichtung für Gleiskettenfahrzeuge mit einer hydraulisch beaufschlagbaren Kolben-Zylindereinheit, die mit einem Ende an der Fahrzeugwanne (4) und mit dem anderen Ende an einem verstellbar angeordneten Fahrwerksrad, vorzugsweise an einem, an einer Kurbelschwinge (3) gelagerten Umlenkrad (2) gelagert ist, dadurch gekennzeichnet, daß
- die Kolben-Zylindereinheit einen Zylinder (6) umfaßt, der einen mit Hydrauliköl gefüllten Hauptzylinderraum (10) umschließt, der an einem Ende vom Zylinderboden (8) und am anderen Ende vom Kolbenboden (9) einer Kolbeneinheit (7) begrenzt ist,
- die Kolbeneinheit (7) einen Stößel (11) gelagert hat, der an seinem freien Ende am verschieblich gelagerten Fahrwerksrad angelenkt ist und am anderen Ende als Stößelkolben (13) ausgebildet ist, mit dem ein in der Kolbeneinheit (7) eingeschlossener Nebenzylinderren (14) begrenzt wird,
- der Stößel (11) gegenüber der Kolbeneinheit (7) über eine Federungseinheit abgestützt ist,
- im Stößelkolben (13), in der Kolbeneinheit (7) und im Zylinder (6) eine den Nebenzylinderraum (14) mit einem Hydraulikölreservoir (28) verbindende Durchgangsleitung (16) angeordnet ist,
- in der Durchgangsleitung (16) ein den Durchfluß in Richtung des Hydraulikölreservoirs (28) sperrendes Stößel-Rückschlagventil (17) angeordnet ist und
- im Kolbenboden (9) zwei Rückschlagventile (22 und 23) mit entgegengesetzt gerichteter Sperrwirkung angeordnet sind, mit denen der Hauptzylinderraum (10) und der Nebenzylinderraum (14) in Verbindung stehen.

2. Kettenspannvorrichtung nach Anspruch 1, dadurch gekennzeichnet, daß in der Durchgangsleitung (16) ein das Stößel-Rückschlagventil (17) um gehender Bypass (21) angeordnet ist, der mit einem, den Druck im Nebenzylinderraum (14) begrenzenden Druckbegrenzungsventil (20) ausgestattet ist.

3. Kettenspannvorrichtung nach den Ansprüchen 1 und 2, dadurch gekennzeichnet, daß im Zylinderboden (8) ein Überdruckventil (12) angeordnet ist, über das bei Überschreitung zulässiger Drücke Überschußöl aus dem Hauptzylinderraum (10) über eine Überdruckleitung (27) zum Hydraulikölreservoir (28) ableitbar ist.

4. Kettenspannvorrichtung nach Anspruch 3, dadurch gekennzeichnet, daß das Überdruckventil (24) Einrichtungen zur Veränderung des Begrenzungsdruckes aufweist.

5. Kettenspannvorrichtung nach den Ansprüchen 1 bis 3, dadurch gekennzeichnet, daß die Federungseinheit eine progressive Federkennlinie aufweist.

6. Kettenspannvorrichtung nach Anspruch 3, dadurch gekennzeichnet, daß die Federungseinheit aus einem Tellerfederpaket (15) besteht.

7. Kettenspannvorrichtung nach den Ansprüchen 1 bis 6, dadurch gekennzeichnet, daß die Verbindung von den Rückschlagventilen (22 und 23) zum Nebenzylinderraum (14) über im Kolbenboden (9) angeordnete Zulaufbohrungen (9') erfolgt, die bei einer über den Federweg der Federeinheit hinausgehenden Relativbewegung zwischen Kolbeneinheit (7) und Stößelkolben (13) von diesem verschließbar sind.

## Claims

1. Hydraulic tensioning device for track-laying vehicles, comprising a piston-cylinder unit which can be hydraulically loaded, which is articulated at one end to the vehicle shell (4) and at the other end to an adjustably mounted undercarriage wheel, preferably to a guide wheel (2) journalled on a crank rocker (3), characterized in that
- the piston-cylinder unit comprises a cylinder (6) which surrounds a main cylinder chamber (10) filled with hydraulic oil, which chamber is bounded at one end by the cylinder base (8) and at the other end by the piston base (9) of a piston unit (7),
- the piston unit (7) carries a plunger (11), which is articulated at its free end to the displaceably mounted undercarriage wheel and is formed at the other end as a plunger piston (13), by which an auxiliary cylinder chamber (14) enclosed in the piston unit is bounded,
- the plunger (11) is supported relative to the piston unit (7) by a spring unit,
- in the plunger piston (13), in the piston unit (7) and in the cylinder (6), a through line (16), connecting the auxiliary cylinder chamber (14) with a hydraulic oil reservoir (28), is disposed,
- in the through line (16), a plunger non-return valve (17) which blocks the flow towards the hydraulic oil reservoir (28) is disposed, and
- in the piston base (9), two non-return valves (22 and 23) having opposite blocking directions are disposed, by which the main cylinder chamber (10) and the auxiliary cylinder chamber (14) are in communication.
2. Chain track tensioning device according to Claim 1, characterized in that a bypass (21) bypassing the plunger non-return valve (17) is disposed in the through line (16), which (bypass) is equipped with a pressure-limiting valve (20) which limits the pressure in the auxiliary cylinder chamber (14).
3. Chain track tensioning device according to Claims 1 and 2, characterized in that a high-pressure relief valve (12) is disposed in the cylinder base (8), through which valve, when admissible pressures are exceeded, excess oil can be discharged from the main cylinder chamber (10) via an excess pressure line (27) to the hydraulic oil reservoir (28).
4. Chain track tensioning device according to Claim 3, characterized in that the high-pressure relief valve (24) comprises devices for modifying the limiting pressure.
5. Chain track tensioning device according to Claims 1 to 3, characterized in that the spring unit possesses a progressive spring characteristic.
6. Chain track tensioning device according to Claim 3, characterized in that the spring unit consists of a cup spring package (15).

7. Chain track tensioning device according to Claims 1 to 6, characterized in that the connection from the non-return valves (22 and 23) to the auxiliary cylinder chamber (14) takes place through feed bores (9') disposed in the piston base (9), which, when a relative movement between piston unit (7) and plunger piston (13) exceeding the spring travel of the spring unit occurs, are closed by this movement.

## Revendications

1. Dispositif tendeur hydraulique pour véhicules à chenille, ce dispositif comportant une unité cylindre-piston (vérin) qui peut être mise sous pression hydraulique, qui est montée par une de ses extrémités sur la caisse (4) du véhicule et par l'autre extrémité à une roue du mécanisme de déplacement réglable, de préférence à une roue (2) de renvoi montée sur une manivelle (3), dispositif caractérisé en ce que
- l'unité cylindre-piston (vérin) comprend un cylindre (6) qui renferme un espace de cylindre principal (10) rempli d'huile hydraulique, lequel est limité à une extrémité par le fond (8) de cylindre et à l'autre extrémité par la tête (9) du piston d'une unité de piston (7),
- dans l'unité de piston (7) est monté un coulisseau (11) qui est articulé à son extrémité libre sur la roue du mécanisme de déplacement, montée de façon à pouvoir se déplacer, et est conformée à l'autre extrémité en piston de coulisseau (13) , grâce auquel est limité un espace de cylindre secondaire (14) inclus dans l'unité de piston (7),
- le coulisseau (11) s'appuie sur l'unité de piston (7) par l'intermédiaire d'une unité de ressorts,
- une conduite (16) de passage reliant l'espace de cylindre secondaire (14) à un réservoir (28) d'huile hydraulique, est disposée dans le piston de coulisseau (13), dans l'unité de piston (7) et dans le cylindre (6),
- dans la conduite (16) de passage est disposée une soupape (17) de retenue de coulisseau, qui ferme la communication en direction du réservoir (28) d'huile hydraulique,
- et dans la tête (9) de piston sont disposées deux soupapes (22 et 23) de retenue, dont les sens de retenue sont opposés, et qui font communiquer l'espace de cylindre principal (10) et l'espace de cylindre secondaire (14).
2. Dispositif tendeur hydraulique selon la revendication 1, caractérisé en ce que la conduite (16) de passage comporte un bipasse (21) qui contourne la soupape (17) de retenue de coulisseau, ledit bipasse étant équipé d'une soupape (20) de sûreté qui limite la pression régnant dans l'espace de cylindre secondaire (14).
3. Dispositif tendeur hydraulique selon les revendications 1 et 2, caractérisé en ce qu'une soupape (12) de sûreté est disposée dans le fond (8) de cylindre et permet, en cas de dépassement des pressions autorisées, le renvoi, par une conduite (27) d'évacuation de surpression, de l'excès d'huile, de l'espace de cylindre principal (10) au réservoir (28) d'huile hydraulique.

4. Dispositif tendeur hydraulique selon la revendication 3, caractérisé en ce que la soupape (24) de sûreté présente des dispositfs permettant de modifier la pression limite.

5. Dispositif tendeur hydraulique selon les revendications 1 à 3, caractérisé en ce que l'unité de ressorts présente une courbe caractéristique de ressort progressive.

6. Dispositif tendeur hydraulique selon la revendication 3, caractérisé en ce que l'unité de ressors est constituée par un paquet (15) de ressorts Belleville.

7. Dispositif tendeur hydraulique selon les revendications 1 à 6, caractérisé en ce que la communication entre les soupapes (22 et 23) de retenue et l'espace de cylindre secondaire (14) s'établit par l'intermédiaire d'alésages (9') d'entrée, disposés dans la tête (9) de piston et qui, dans le cas d'un mouvement relatif excédant la course élastique de l'unité de ressorts, entre l'unité de piston (7) et le piston (13) de coulisseau, peuvent être fermés par ce dernier.

**Fig.1**

0 141 265

Fig. 2

0 141 265